# EUROPÄISCHE PATENTANMELDUNG

(11) **EP 3 734 103 A1**
(43) Veröffentlichungstag der Anmeldung: **04.11.2020**
(21) Anmeldenummer: 20170795.7
(22) Anmeldetag: 22.04.2020
(51) Int. Cl.: F16D 55/227, B61H 5/00

(54) **VERBINDUNGSSYSTEM MIT DOPPELSCHWIMMLAGERUNG FÜR EINE BREMSBETÄTIGUNGSEINHEIT**

(30) Priorität: 03.05.2019 DE 102019111471
(71) Anmelder: KNORR-BREMSE Systeme für Schienenfahrzeuge GmbH, 80809 München (DE)
(72) Erfinder: MUHR, Jürgen, 82284 Grafrath (DE); SCHRUPP, Christian, 86316 Friedberg (DE)

(57) **Zusammenfassung**

Die vorliegende Erfindung betrifft ein Verbindungssystem (10) zur Verbindung wenigstens einer mitlenkenden Radachse (12) und wenigstens einer Bremsbetätigungseinheit (14) eines Schienenfahrzeug, mit wenigstens einem Mitnehmer (16), der mit der mitlenkenden Radachse (12) verbunden ist und wenigstens einen Anlenkungspunkt (18) an der Bremsbetätigungseinheit (14) zu deren Verschiebung aufweist, wobei der Anlenkungspunkt (18) mit der Bremsbetätigungseinheit (14) im montierten Zustand verbunden ist und wobei die Bremsbetätigungseinheit (14) wenigstens eine Schwimmlageranordnung (20) aufweist, wobei mittels der Schwimmlageranordnung (20) eine schwimmende Lagerung der Bremsbetätigungseinheit (14) zumindest in x-Richtung und zumindest in y-Richtung ausgebildet ist, wobei sich die x-Richtung in ihrer Ausrichtung von der y-Richtung unterscheidet.

## Beschreibung

Die vorliegende Erfindung betrifft ein Verbindungssystem zur Verbindung wenigstens einer mitlenkenden Radachse und wenigstens einer Bremsbetätigungseinheit eines Schienenfahrzeugs.

Derartige Verbindungssysteme dienen insbesondere dazu, einerseits in jedem Betriebszustand der Bremseinrichtung des Schienenfahrzeugs die erforderlichen Bremskräfte sicher und zuverlässig zu übertragen und andererseits insbesondere Relativbewegungen der Bremsbetätigungseinheit und Bremsscheibe auszugleichen. Die Bremsbetätigungseinheit im Wesentlichen bestehend aus einem Bremssattel und einem Bremssattelträger ist als eine Untereinheit einer Bremseinrichtung des Schienenfahrzeugs zu sehen, die im Wesentlichen durch die Hauptkomponenten Bremsscheibe, Bremsbeläge und Bremsbetätigungseinheit aufgebaut ist.

Aus der DE 10 2006 016 130 A1 ist bereits ein Bremssattel für eine Scheibenbremse bekannt, wobei der Bremssattel als Rahmensattel mit zwei zueinander parallelen Sattelplatten ausgebildet ist, die durch Zuganker an ihren Enden miteinander verbunden sind, wobei die Zuganker mit einer Sattelplatte einstückig ausgebildet sind und die andere Sattelplatte hintergreifen.

Ferner offenbaren die DE 10 2006 018 953 A1 bzw. WO 2007/122077 A1 eine Schwimmsattelbremse mit einem festen und einem beweglichen Reibbremsbelag und mit einer beispielsweise hydraulischen oder elektromechanischen Betätigungseinrichtung zum Drücken des beweglichen Reibbremsbelags gegen die Bremsscheibe. Die Erfindung schlägt eine Einrichtung zur Einstellung eines Freispiels auf beiden Seiten der Bremsscheibe beim Lösen der Schwimmsattelbremse vor.

Zudem zeigen die DE 10 2015 105 712 A1 bzw. die WO 2016/166155 A1 eine Vorrichtung zum Befestigen eines Bremssattels an einem Rahmen eines Fahrzeuges, wobei der Bremssattel zu einer Bremse des Fahrzeuges gehört, um eine drehbare Bremsscheibe zu bremsen.

Mit bekannten Verbindungssystemen bzw. Aufnahmen oder Lagerungen von Bremsbetätigungseinheiten aus dem vorstehend genannten Stand der Technik können aktuell bis +/- 7mm an Relativbewegung zwischen Bremsscheibe und Bremssattel in longitudinaler Richtung (also in Bewegungsrichtung des Schienenfahrzeugs) ausgeglichen werden. Durch Optimierung dieses bereits bekannten Konstruktionsprinzips wären diesbezüglich bis zu +/- 15mm möglich.

Da ein aktueller Forschungsgegenstand eines neuen Fahrzeugkonzepts eines Schienenfahrzeugs eine mitlenkende Radachse betrifft, entsteht hierdurch eine Gesamtrelativbewegung zwischen einer Bremsscheibe und einem Bremssattel mit einem Bremssattelträger in longitudinaler Richtung von ca. +/- 35mm. Diese hohe Relativbewegung kann mit konventionellen Lagerungskonzepten aus dem Stand der Technik nicht mehr abgebildet werden. Im Übrigen überschreitet diese hohe longitudinale Verschiebung eine notwendige und zulässige funktionale Überdeckung zwischen Bremsbelag und Bremsscheibe, was zu unerwünschten Betriebszuständen oder gar dem Ausfall einer Bremseinrichtung führen kann.

Aus diesen Gründen wird ein Verbindungssystem für eine Bremsbetätigungseinheit erforderlich, die eine Ausrichtung des Bremssattels bzw. der Bremsbetätigungseinheit zur Bremsscheibe in Abhängigkeit der Lenkbewegung der Achse ermöglicht. Folglich kann so die erforderliche funktionale Überdeckung zwischen Bremsbelag und Bremsscheibe weiterhin gewährleistet werden und die sichere Übertragung der erforderlichen Bremskräfte weiterhin erfolgen.

Es ist daher die Aufgabe der vorliegenden Erfindung, ein Verbindungssystem der eingangs genannten Art in vorteilhafter Weise weiterzubilden, insbesondere dahingehend, dass bei Einsatz einer mitlenkenden Radachse eines Schienenfahrzeugs die erforderliche funktionale Überdeckung zwischen Bremsbelag und Bremsscheibe weiterhin sichergestellt werden kann und so die erforderlichen Bremskräfte sicher und zuverlässig übertragen werden können.

Diese Aufgabe wird erfindungsgemäß gelöst durch ein Verbindungssystem mit den Merkmalen des Anspruchs 1. Danach ist vorgesehen, dass ein Verbindungssystem zur Verbindung wenigstens einer mitlenkenden Radachse und wenigstens einer Bremsbetätigungseinheit eines Schienenfahrzeugs mit wenigstens einem Mitnehmer bereitgestellt wird, der mit der mitlenkenden Radachse verbunden ist und wenigstens einen Anlenkungspunkt an der Bremsbetätigungseinheit zu deren Verschiebung aufweist, wobei der Anlenkungspunkt mit der Bremsbetätigungseinheit im montierten Zustand verbunden ist und wobei die Bremsbetätigungseinheit wenigstens eine Schwimmlageranordnung aufweist, wobei mittels der Schwimmlageranordnung eine schwimmende Lagerung der Bremsbetätigungseinheit zumindest in x-Richtung und zumindest in y-Richtung ausgebildet ist, wobei sich die x-Richtung in ihrer Ausrichtung von der y-Richtung unterscheidet.

Die Erfindung basiert auf dem Grundgedanken, dass die Bremsbetätigungseinheit eine Schwimmlageranordnung aufweist, mittels derer eine schwimmende Lagerung der Bremsbetätigungseinheit, insbesondere eines Bremssattels, sowohl in x-Richtung als auch in y-Richtung gewährleistet werden kann. Durch eine zusätzliche Schwimmlagerung in x-Richtung, welche in longitudinaler Richtung wirkt, wird über eine Verbindung (z.B. Lenkgestänge) der Bremsbetätigungseinheit (z.B. über den Sattelträger des Bremssattels) zur lenkenden Radachse eine Verschiebung der Bremsbetätigungseinheit und insbesondere des Bremssattels in Abhängigkeit der Lenkbewegung ermöglicht. Unabhängig von den Lenkbewegungen der Radachse treten zusätzlich Relativbewegungen in alle Richtungen durch Einfederungseffekte auf, welche durch die bereits bestehende Schwimmlagerung in y-Richtung übertragen bzw. ausgeglichen werden. Mit anderen Worten erfordert die Verwendung einer mitlenkenden Radachse aufgrund der daraus resultierenden hohen Relativbewegungen in x-Richtung bzw. longitudinaler Richtung zwischen der Bremsbetätigungseinheit und der Bremsscheibe eine zusätzliche Möglichkeit, diese Relativbewegungen auszugleichen. Es wird bezüglich dieser Erfindung die x-Richtung als longitudinale Richtung verstanden, die im Wesentlichen einer Longitudinalbewegungsrichtung des Schienenfahrzeugs entlang seiner Längs- bzw. Mittelachse entspricht. Die x-Richtung, die y-Richtung sowie eine vertikale z-Richtung bilden damit ein kartesisches Koordinatensystem X, Y, Z aus. Somit ist insbesondere die x-Richtung um ca. 90° zu der y-Richtung ausgerichtet. Die weiteren Ausrichtungen ergeben sich aus der Definition des kartesischen Koordinatensystems X, Y, Z. Im vorliegenden Fall bildet die x-Richtung eine Longitudinalbewegungsrichtung bzw. Längsbewegungsrichtung, die y-Richtung eine Querbewegungsrichtung bzw. transverale Bewegungsrichtung sowie die z-Richtung eine vertikale Bewegungsrichtung des Schienenfahrzeugs aus.

Im Übrigen kann vorgesehen sein, dass die Schwimmlageranordnung wenigstens eine erste Schwimmlagereinheit aufweist, mittels derer die schwimmende Lagerung der Bremsbetätigungseinheit zumindest in x-Richtung ausgebildet ist. Durch die erste Schwimmlagereinheit kann eine funktionale und strukturelle Trennung zwischen der Schwimmlagerung in x- und y-Richtung erfolgen. Diese Trennung ermöglicht eine sichere und zuverlässige schwimmende Lagerung der Bremsbetätigungseinheit in x-Richtung bzw. longitudinaler Richtung. Die erste Schwimmlagereinheit dient insbesondere (bzw. auch ausschließlich) der Positionierung von Bremssattel zu Bremsscheibe. Sofern die erste Schwimmlagerung (ausschließlich) der Positionierung von Bremssattel zu Bremsscheibe dient, kann bzw. wird eine reduzierte Steifigkeit und eine schlechtere Ausleitung der Reaktionskräfte in Kauf genommen.

Weiter ist vorstellbar, dass die Bremsbetätigungseinheit wenigstens einen Bremssattel aufweist und die Schwimmlageranordnung wenigstens eine zweite Schwimmlagereinheit aufweist, mittels derer die schwimmende Lagerung des Bremssattels zumindest in y-Richtung ausgebildet ist. Die zweite Schwimmlagereinheit gewährleistet eine Relativbewegung des Bremssattels bezogen auf die gesamte Bremsbetätigungseinheit, wodurch die Bewegungen der mitlenkenden Radachse und der damit drehfest verbundenen Bremsscheibe unabhängig von Bewegungen in x-Richtungen ausgeglichen werden können. Die Schwimmlagerung in y-Richtung wird insbesondere dazu benutzt, den Verschleiß an Bremsbelag und Bremsscheibe ausgleichen zu können.

Zudem ist denkbar, dass die Bremsbetätigungseinheit wenigstens einen Bremssattelträger aufweist, wobei die erste Schwimmlagereinheit mittels des Bremssattelträgers und wenigstens einer Schwimmlageraufnahmeeinheit wenigstens z.B. eines Drehgestells des Schienenfahrzeugs ausgebildet ist. Der Einsatz ist jedoch nicht auf Drehgestelle beschränkt, vergleichbare bzw. andere geeignete Komponenten eine Schienenfahrzeugs können ebenfalls verwendet werden. Der Bremssattelträger ermöglicht eine sehr verwindungssteife Lagerung bzw. Aufnahme des Bremssattels, wodurch sich zum einen eine vorteilhaftere Bremswirkung bzw. Bremsleistung erzielen lässt. Zum anderen gewährleistet der Bremssattelträger eine direkte Einleitung der Bremskräfte und Bremsmomente in das Drehgestell, wodurch sich die Steifigkeit der Schwimmlagereinheit in x-Richtung selbst ebenfalls erhöhen lässt und sich dadurch eine Verbesserung ihrer Schwimmlagereigenschaften in denen durch sie zugelassenen Freiheitsgraden verbessert.

Außerdem ist es möglich, dass die erste Schwimmlagereinheit eine Linearführungseinheit aufweist, mittels derer die Bremsbetätigungseinheit in x-Richtung verschiebbar ist. Die Linearführungseinheit erlaubt eine leichtgängige und kinematisch eindeutig definierte Schwimmlagerung des Bremssattelträgers und des Bremssattels in x-Richtung. Hierdurch verringert sich das Ansprechverhalten und die Trägheit zur Verschiebung bzw. zur Verlagerung des Bremssattelträgers in x-Richtung, was ebenfalls in einer besseren Bremsleistung resultiert. Im Übrigen kann durch die Linearführungseinheit eine große wirksame Abstützlänge bzw. ein großer wirksamer Abstützhebelarm zur Einleitung der Bremsmomente (mit Richtungsvektor in y-Richtung) in das Drehgestell vorgesehen werden, wodurch sich die Steifigkeit und dadurch die Bremsleistung, infolge weniger elastischer Verformungen der Bremsbetätigungseinheit, weiter verbessert.

Des Weiteren kann vorgesehen sein, dass die Linearführungseinheit wenigstens einen ersten Linearführungsbolzen und wenigstens einen zweiten Linearführungsbolzen aufweist. Durch zwei Linearführungsbolzen wird die Steifigkeit der ersten Schwimmlagerung insbesondere im Hinblick auf Brems- oder Verlagerungsmomente gesteigert, deren jeweiliger Richtungsvektor sich im Wesentlichen entlang der x-Achse erstreckt. Derartige sich in x-Richtung erstreckende Momente können beispielsweise durch Brems- und Verschiebungskräfte in y-Richtung ausgelöst werden und von dem Bremssattel über den Bremssattelträger in die Linearführungseinheit eingeleitet werden. Insbesondere sind der erste und zweite Linearführungsbolzen parallel zueinander angeordnet. Durch den Abstand dieser beiden zueinander angeordneten Linearführungsbolzen kann besonders vorteilhaft und einfach die jeweilig gewünschte Steifigkeit beeinflusst werden.

Ebenfalls ist vorstellbar, dass der erste Linearführungsbolzen in einer ersten Bolzenaufnahme des Bremssattelträgers gelagert ist und der zweite Linearführungsbolzen in einer zweiten Bolzenaufnahme des Bremssattelträgers gelagert ist. Somit kann der Bremssattelträger kompakt und gleichzeitig verwindungssteif ausgeführt werden, da beide Bolzenaufnahmen bzw. Bolzenlagerungen einstückig in den Bremssattelträger integriert werden können. Zudem kann ein sehr einfacher Aufbau unter Verwendung vieler Gleichteile für die erste und zweite Bolzenaufnahme realisiert werden, wodurch sich Kostenvorteile und eine vereinfachte Herstellung des Bremssattelträgers ergeben. Eine derartige Lagerung erlaubt ferner eine reibungsminimierte axiale Verschiebung des Bremssattelträgers bezüglich der Linearführungsbolzen. Die Lagerung des ersten und zweiten Linearführungsbolzens kann mittels Lineargleitlager, insbesondere Lineargleitbuchsen, erfolgen, die in der ersten und zweiten Bolzenaufnahme angeordnet sind. Andere geeignete Linearlager wie Linearwälzlager können ebenfalls verwendet werden.

Darüber hinaus ist denkbar, dass der erste und zweite Linearführungsbolzen in der Schwimmlageraufnahmeeinheit des Drehgestells aufgenommen sind. Die Aufnahme des ersten und zweiten Linearführungsbolzens erlaubt eine direkte Kräfte- und Momenteneinleitung von dem Bremssattelträger über einen minimierten Hebelarm in das Drehgestell. Dadurch kann die strukturelle Belastung der Linearführung sowie des Bremssattelträgers minimiert werden. Infolgedessen können ebenso die Abmaße dieser Bauteile aufgrund der gesunkenen strukturellen Belastung verringert werden, sodass diese Bauteile kleiner, leichter und insgesamt kostengünstiger hergestellt und ausgestaltet werden können. Die Schwimmlageraufnahmeeinheit an dem Drehgestell für die erste Schwimmlagereinheit kann für den ersten und zweiten Linearführungsbolzen jeweils durch eine Festlagerung an einem ersten Bolzenende und eine Loslagerung an einem zweiten Bolzenende erfolgen. Andere Lagerungsformen wie angestellte Lagerungen oder schwimmende Lagerungen der beiden Linearführungsbolzen an sich sind in diesem Zusammenhang ebenfalls denkbar.

Weiter ist möglich, dass zwischen der ersten Bolzenaufnahme und der Schwimmlageraufnahmeeinheit sowie zwischen der zweiten Bolzenaufnahme und der Schwimmlageraufnahmeeinheit jeweils eine Dichtmanschette angeordnet ist, die den ersten und zweiten Linearführungsbolzen dichtend umschließt. Um eine sichere Funktion der ersten Schwimmlagereinheit zu gewährleisten, ist eine Abdichtung der Laufflächen der beiden Linearführungsbolzen nötig. Ohne eine derartige Dicht- bzw. Abdichtmanschette könnten sich die Laufflächen der beiden Linearführungsbolzen mit Schmutz zusetzen oder durch eindringendes Wasser korrodieren oder durch andere verschließfördernde Faktoren (wie chemische Substanzen) abnutzen, so dass sich die Lebensdauer der Linearführung unverhältnismäßig stark verkürzen würde. Die Dichtmanschnetten können insbesondere auch als Dichtbälge, Dichtwellschlauchstücke oder Dichthülsen ausgebildet sein. Demnach kann die Lebensdauer der Linearführung durch derartige Abdichtungen vorteilhaft erhöht werden. Zudem ermöglichen diese Abdichtungen, dass das eingesetzte Schmiermittel (z.B. Schmieröl oder Schmierfett) nicht in die Umwelt gelangt und schädliche Folgen für diese hat. Zusätzlich oder alternativ können auch andere Dichtkonzepte wie z.B. Dichtringe ebenfalls vorgesehen werden.

Zusätzlich kann vorgesehen sein, dass der Mitnehmer an seinem ersten Ende mit der mitlenkenden Radachse des Schienenfahrzeugs über wenigstens eine Radiallagereinheit drehbar verbunden ist und axial fixiert ist. Wie vorstehend beschrieben, stellt der Mitnehmer die Verbindung zu der Bremsbetätigungseinheit her, die im Wesentlichen bezüglich der drehbaren, mitlenkenden Radachse ruht. Insbesondere ist hierbei vorgesehen, dass der Mitnehmer in seiner Position drehfest zur mitlenkenden Achse fixiert ist (und die Funktion eine Drehmomentstütze übernimmt). Demnach ist eine Radiallagereinheit dahingehend notwendig und vorteilhaft, um die Verschwenkbewegung der mitlenkenden und sich im Regelfall drehenden Radachse an die diesbezüglich ruhende Bremsbetätigungseinheit sicher zu übertragen. Die Radiallagereinheit stellt somit eine einfache Lösung dar, um die Schwenkbewegung u.a. in x-Richtung der Radachse auf die diesbezüglich im Wesentlichen ruhende Bremsbetätigungseinheit zu übertragen und diese entsprechend der Verschwenkbewegung zumindest teilweise in x-Richtung an die Bremsbetätigungseinheit zu übertragen und diese ebenfalls in x-Richtung zu verschieben. Die Radiallagereinheit kann insbesondere als Radialwälzlagereinheit ausgebildet sein, die zudem dazu eingerichtet ist Kräfte in axialer Richtung entlang der Radachse aufzunehmen und an den Mitnehmer zu übertragen. Andere geeignete Radiallagereinheiten können ebenfalls vorgesehen sein.

Ferner ist vorstellbar, dass der Mitnehmer an seinem zweiten Ende mittels eines ersten Drehgelenks mit einem Lenkgestänge verbunden ist, das mittels eines zweiten Drehgelenks den Anlenkungspunkt ausbildet. Durch das Lenkgestänge kann die Verschwenkbewegung zumindest teilweise in x-Richtung ausgehend von dem Mitnehmer in den Anlenkungspunkt übertragen werden. Somit ist eine resultierende Verschiebung der Bremsbetätigungseinheit in x-Richtung bzw. Longitudinalrichtung infolge der Verschwenkbewegung der mitlenkenden Radachse in kinematisch sehr einfacher Weise unter Einsatz sehr simpel aufgebauter Bauteile möglich. Durch den Einsatz der beiden Drehgelenke des Lenkgestänges werden zudem Relativbewegungen der Radachse bezogen auf die Bremsbetätigungseinheit z.B. in vertikaler Richtung erst ermöglicht und ebenfalls konstruktiv in sehr einfacher Weise kinematisch gelöst. Mit anderen Worten wird somit insgesamt eine konstruktiv sehr einfache Betätigungseinheit aus Mitnehmer und Lenkgestänge bzw. Betätigungsgestänge vorgesehen, welche die Verschwenkbewegung der Radachse zumindest teilweise in x-Richtung an die Bremsbetätigungseinheit übertragen und diese entsprechend auch in x-Richtung verschieben kann.

Auch ist es denkbar, dass das zweite Drehgelenk im montierten Zustand der Bremsbetätigungseinheit oberhalb der ersten und zweiten Bolzenaufnahme angeordnet ist und an der ersten und/oder zweiten Bolzenaufnahme befestigt ist. Demzufolge erfolgt die Krafteinleitung der Verschiebungskraft in x-Richtung infolge der Verschwenkbewegung der Radachse wie vorstehend beschrieben direkt an der ersten Schwimmlagereinheit in einem minimalen Abstand dazu. Diese Anordnung ermöglicht eine Minimierung des Verschiebedrehmoments, das infolge der Einleitung der Verschiebekraft in x-Richtung ausgehend von dem Lenkgestänge in die erste Schwimmlagereinheit eingeleitet wird. Somit wird insbesondere die Verkippneigung und die Verklemmneigung der ersten Schwimmlagereinheit reduziert, was in einer geringeren Materialbelastung, einem geringeren Verschleiß und einer erhöhten Lebensdauer verbunden mit einer Erhöhung der Steifigkeit der ersten Schwimmlagereinheit resultiert.

Weitere Einzelheiten und Vorteile der Erfindung sollen nun anhand eines in den Zeichnungen dargestellten Ausführungsbeispiels näher erläutert werden.

Es zeigen:
- Fig. 1: eine Seitenansicht eines Ausführungsbeispiels eines erfindungsgemäßen Verbindungssystems;
- Fig. 2: eine Draufsicht des Ausführungsbeispiels des erfindungsgemäßen Verbindungssystems gemäß Fig. 1; und
- Fig. 3: eine Vorderansicht des Ausführungsbeispiels des erfindungsgemäßen Verbindungssystems gemäß Fig. 1.

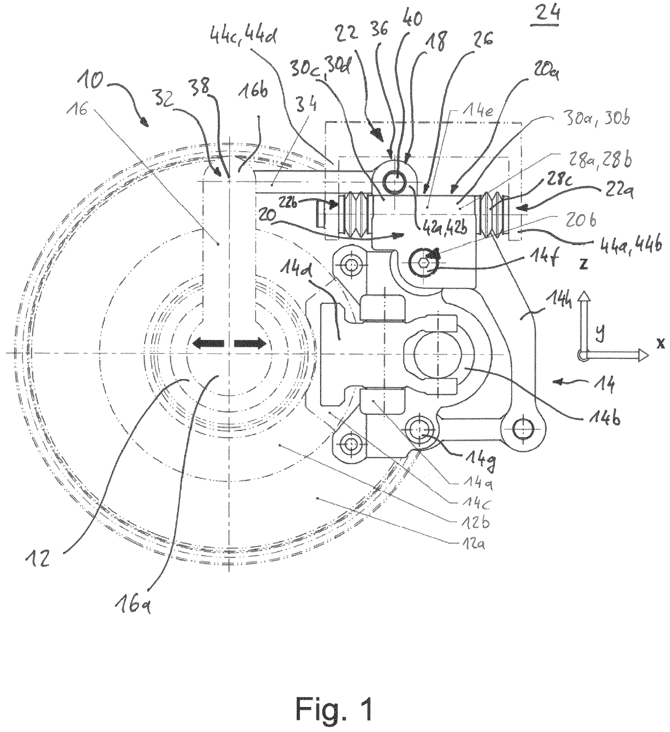

**Fig. 1** zeigt eine Vorderansicht eines Ausführungsbeispiels eines erfindungsgemäßen Verbindungssystems 10.

Das Verbindungssystem 10 zur Verbindung einer mitlenkenden Radachse 12 und einer Bremsbetätigungseinheit 14 eines Schienenfahrzeugs weist einen Mitnehmer 16 auf.

Zwischen Mitnehmer 16 und einem ersten Fahrzeugrad 12a der Radachse ist eine Bremsscheibe 12b angeordnet, die von der Bremsbetätigungseinheit 14 radial von außen umgriffen wird.

Das Verbindungssystem 10, die Bremsscheibe 12b, die Bremsbetätigungseinheit 14 sowie der Mitnehmer 16 sind daher axial außerhalb des Fahrzeugrades 12a angeordnet, wobei dies für beide Fahrzeugräder 12a des Schienenfahrzeugs gilt.

Alternativ oder zusätzlich können das Verbindungssystem 10, die Bremsscheibe 12b, die Bremsbetätigungseinheit 14 sowie der Mitnehmer 16 auch zwischen zwei Fahrzeugrädern 12a angeordnet sein.

In Fig. 1 ist beispielhaft zum besseren Verständnis lediglich eine dieser vorstehend beschriebenen Baugruppen dargestellt.

Selbstverständlich kann das Schienenfahrzeug auch mehrere dieser Baugruppen umfassen.

Der Mitnehmer 16 ist als stangenförmiger Hebel ausgebildet, der sich im montierten Zustand ausgehend von einem Ende der Radachse 12 vertikal in z-Richtung darüber erstreckt.

Der Mitnehmer 16 ist mit der mitlenkenden Radachse 12 über eine Radiallagereinheit (nicht in Fig. 1 gezeigt) verbunden. Dabei ist der Mitnehmer 16 in seiner Position drehfest zur mitlenkenden Achse fixiert und fungiert als Drehmomentstütze. Er ist somit axial und rotatorisch fixiert.

Der Mitnehmer 16 ist insbesondere derart mit der mitlenkenden Radachse 12 verbunden, dass dieser an seinem ersten Ende 16a mit der Radachse 12 des Schienenfahrzeugs über eine Radiallagereinheit drehbar verbunden ist und axial fixiert ist.

Der Mitnehmer 16 ist zudem an seinem zweiten Ende 16b mittels eines ersten Drehgelenks 32 mit einem Lenkgestänge 34 bzw. Verbindungsgestänge 34 verbunden.

Das erste Drehgelenk 32 ist über einen ersten Drehgelenkszapfen 38 an dem zweiten Ende 16b des Mitnehmers 16 drehbar befestigt.

Das Lenkgestänge 34 ist wiederum mittels eines zweiten Drehgelenks 36 an dem Anlenkungspunkt 18 mit der Bremsbetätigungseinheit 14 zu deren Verschiebung in x-Richtung verbunden.

Die Verschiebung der Bremsbetätigungseinheit 14 verläuft in x-Richtung gemäß eingezeichnetem kartesischem Koordinatensystem X, Y, Z in Fig. 1 durch eine Verschiebungsbewegung des Lenkgestänges bzw. Verschiebungsgestänges 34.

Die x-Richtung bildet eine Longitudinalbewegungsrichtung bzw. Längsbewegungsrichtung, die y-Richtung eine Querbewegungsrichtung bzw. seitliche Bewegungsrichtung sowie die z-Richtung eine vertikale Bewegungsrichtung des Schienenfahrzeugs entlang seiner Längs- bzw. Mittelachse aus.

Die x-Richtung erstreckt sich gemäß in Fig. 1 eingezeichnetem Koordinatensystem im Wesentlichen parallel zur Fahrzeugmittelachse des Schienenfahrzeugs.

Damit schließen die x-Richtung und die y-Richtung einen Winkel von ca. 90° ein.

Demensprechend schließen auch die z-Richtung und die x-Richtung einen Winkel von ca. 90° ein.

Die y-Richtung wiederum schließt einen Winkel von ca. 90° zu der Ebene ein, welche durch die x- und z-Richtung aufgespannt wird.

Weiteren geometrische Beziehungen zwischen der x-, y- und z-Richtung ergeben sich aus dem kartesischen Koordinatensystem X, Y, Z gemäß Fig. 1.

Die Bremsbetätigungseinheit 14 weist weiter einen Bremssattel 14a auf.

Der Bremssattel umfasst eine hydraulische Zylinder-Kolben-Einheit 14b, deren Mittelachse sich in y-Richtung erstreckt, zur Betätigung wenigstens eines Bremsbelags 14c über eine Druckleiste 14d.

Zusätzlich oder alternativ kann es sich bei der Zylinder-Kolben-Einheit 14b auch um eine pneumatisch, mechanisch oder elektrisch betätigbare Zylinder-Kolben-Einheit 14b handeln.

Auch elektro-pneumatisch, elektro-mechanisch oder elektro-hydraulisch betätigbare Zylinder-Kolben-Einheiten 14b sind in diesem Zusammenhang denkbar.

Die Druckleiste 14d ist dabei schwenkbar an zwei Drehgelenken des Bremssattels 14a gelagert und überträgt die Druckkraft der Zylinder-Kolben-Einheit 14b auf den Bremsbelag 14c.

Weiter umfasst die Bremsbetätigungseinheit 14 einen Bremssattelträger 14e.

Der Bremssattelträger 14e weist einen Hauptkörper auf, der den Bremssattel 14a teilweise umgreift.

Der Hauptkörper des Bremssattelträgers 14e ist über einen Verbindungsbolzen 14f mit dem Bremssattel 14a verbunden.

Aus dem Hauptkörper erhebt sich ein einstückig mit diesem verbundener Stützarm 14h, der über ein Stützgestänge an einem weiteren Verbindungsbolzen 14g des Bremssattels 14a an diesem angelenkt ist.

Weiter umfasst die die Bremsbetätigungseinheit 14 eine Schwimmlageranordnung 20.

Mittels der Schwimmlageranordnung 20 ist eine schwimmende Lagerung der Bremsbetätigungseinheit 14 in x-Richtung und in y-Richtung ausgebildet.

Die Schwimmlageranordnung 20 weist eine erste Schwimmlagereinheit 20a auf.

Gemäß Fig. 1 ist ferner die erste Schwimmlagereinheit 20a mittels des Bremssattelträgers 14e und einer Schwimmlageraufnahmeeinheit 22 eines Drehgestells 24 des Schienenfahrzeugs ausgebildet.

Die erste Schwimmlagereinheit 20a bildet die schwimmende Lagerung der Bremsbetätigungseinheit 14 und insbesondere des Bremssattelträgers 14e in x-Richtung aus.

Die erste Schwimmlagereinheit 20a weist weiter eine Linearführungseinheit 26 auf, durch welche die Bremsbetätigungseinheit 14 und insbesondere des Bremssattelträgers 14e in x-Richtung verschiebbar ist.

Die Linearführungseinheit 26 weist einen ersten Linearführungsbolzen 28a und einen zweiten Linearführungsbolzen 28b auf.

Der erste und zweite Linearführungsbolzen 28a, 28b sind als zylindrische Bolzen ausgebildet und sind parallel zueinander angeordnet.

Der erste Linearführungsbolzen 28a ist in einer ersten Bolzenaufnahme 30a des Bremssattelträgers 14e gelagert.

Der zweite Linearführungsbolzen 28b ist in einer zweiten Bolzenaufnahme 30b des Bremssattelträgers 14e gelagert.

Die erste und zweite Bolzenaufnahme 30a, 30b sind jeweils als zylindrische Kreisdurchgangslöcher in dem Hauptkörper des Bremssattelträgers 14e eingebracht.

An den jeweiligen Enden der ersten und zweiten Bolzenaufnahme 30a, 30b sind Gleitlagerbuchsen 30c, 30d angeordnet, die im montierten Zustand auf dem ersten und zweiten Linearführungsbolzen 28a, 28b geführt sind. Das zweite Drehgelenk 36 ist ferner im montierten Zustand der Bremsbetätigungseinheit 14 oberhalb der ersten und zweiten Bolzenaufnahme 30a, 30b angeordnet.

Die Anbindung des Lenkgestänges 34 muss jedoch nicht zwangsläufig "oberhalb" angeordnet sein. Grundsätzlich sind auch andere Positionen denkbar, beispielsweise könnte der Anlenkpunkt 18 irgenwo zwischen der aktuell gezeigten Position und z.B. Pos. 14g liegen.

Das zweite Drehgelenk 36 ist gemäß Fig. 1 über einen zweiten Drehgelenkszapfen 40 an dem Anlenkungspunkt 18 über zwei Verbindungsschenkel 42a, 42b drehbar der ersten und zweiten Bolzenaufnahme 30a, 30b befestigt.

Gemäß Fig. 1 sind der erste und zweite Linearführungsbolzen 28a, 28b in der Schwimmlageraufnahmeeinheit 22 des Drehgestells 24 aufgenommen.

Die Schwimmlageraufnahmeeinheit 22 umfasst zwei erste mit den jeweiligen ersten Enden des ersten und zweiten Linearführungsbolzens 28a, 28b korrespondierende Aufnahmeaussparungen 22a, 22b.

Demzufolge umfasst die Schwimmlageraufnahmeeinheit 22 zwei zweite mit den jeweiligen zweiten Enden des ersten und zweiten Linearführungsbolzens 28a, 28b korrespondierende Aufnahmeaussparungen 22a, 22b.

Die jeweiligen ersten und zweiten Enden der Linearführungsbolzen 28a, 28b sind allerdings über jeweils eine Aufnahmebuchse in den korrespondierenden Aufnahmeaussparungen 22a, 22b der Schwimmlageraufnahmeeinheit 22 aufgenommen.

Ferner sind zwischen der ersten Bolzenaufnahme 30a und der Schwimmlageraufnahmeeinheit 22 zwei Dichtmanschetten 28c angeordnet, die den ersten Linearführungsbolzen 28a dichtend umschließen.

Weiter sind zwischen der zweiten Bolzenaufnahme 30b und der Schwimmlageraufnahmeeinheit 22 zwei weitere Dichtmanschetten 28c angeordnet, die den zweiten Linearführungsbolzen 28b dichtend umschließen.

Somit werden die zwei freien Abschnitte des ersten Linearführungsbolzens 28a, die sich zwischen der ersten Bolzenaufnahme 30a und der Schwimmlageraufnahmeeinheit 22 erstrecken jeweils durch eine Dichtmanschnette 28c 28c umschlossen.

Gemäß Fig. 1 ist jede Dichtmanschnette 28c als Dichtbalg 28c ausgebildet.

Der jeweilige Dichtbalg 28c ist dabei sowohl an der ersten Bolzenaufnahme 30a als auch an der Schwimmlageraufnahmeeinheit 22 befestigt.

Demzufolge werden auch die zwei freien Abschnitte des zweiten Linearführungsbolzens 28b, die sich zwischen der zweiten Bolzenaufnahme 30b und der Schwimmlageraufnahmeeinheit 22 erstrecken jeweils durch ein Dichtbalg 28c umschlossen.

Der jeweilige Dichtbalg 28c ist dabei sowohl an der zweiten Bolzenaufnahme 30b und an der Schwimmlageraufnahmeeinheit 22 befestigt.

Gemäß eines anderen Ausführungsbeispiels kann die Dichtmanschette 28c zusätzlich oder alternativ auch Dichtwellschlauchstück oder Dichthülse ausgebildet sein.

Gemäß Fig. 1 weist die Schwimmlageranordnung 20 ferner eine zweite Schwimmlagereinheit 20b auf.

Durch die zweite Schwimmlagereinheit 20b ist folglich die schwimmende Lagerung des Bremssattels 14a in y-Richtung ausgebildet.

Die zweite Schwimmlagereinheit 20b ist durch den Bremssattel 14a und den Bremssattelträger 14e in y-Richtung ausgebildet.

Dazu ist der Bremssattel 14a durch die beiden Verbindungsbolzen 14f, 14g an dem Bremssattelträger 14e in y-Richtung schwimmend gelagert.

Durch die Verbindungsbolzen 14f, 14g ist somit die zweite Schwimmlagereinheit 20b in y-Richtung zwischen Bremssattel 14a und Bremssattelträger 14e ausgebildet.

Hierdurch wird eine relative Verschiebung des Bremssattels 14a bezogen auf den Bremssattelträger 14e in y-Richtung ausgebildet, die infolge einer Verschiebung der Bremsscheibe 12b bezüglich eines Drehgestells 24 des Schienenfahrzeugs in y-Richtung auftritt. Die Hauptfunktion der Schwimmlagerung in y-Richtung besteht darin, den Verschleiß an Bremsbelag und Bremsscheibe auszugleichen.

Die Funktion des Verbindungssystems 10 lässt sich nun wie folgt beschreiben:
Da die Radachse 12 als mitlenkende Radachse konzipiert ist, ergeben sich aufgrund der daraus resultierenden Achsverschwenkung größere relative Bewegungen zwischen der Bremsscheibe 12b und der Bremsbetätigungseinheit 14 insbesondere in x-Richtung bzw. Longitudinalrichtung.

Sobald die Radachse 12 derart ausgelenkt wird, wird aufgrund der Verschwenkbewegung der Mitnehmer 16 am Ende der Radachse ebenfalls zumindest teilweise um einen gewissen Betrag in x-Richtung bewegt (der Mitnehmer bewegt sich dabei im Wesentlichen auf einer Kreisbahn in der x-y-Ebene).

Diese Bewegung des Mitnehmers 16 um den Betrag in x-Richtung wird auf das Lenkgestänge 34 übertragen, das wiederum aufgrund seiner Kopplung an dem Anlenkungspunkt 18 eine Bewegung der ersten Schwimmlagereinheit 20a wiederum um denselben Betrag in x-Richtung erzeugt.

Die Bremsbetätigungseinheit 14 bewegt sich somit bei jeder Bewegung der Radachse in x-Richtung um denselben Betrag mit, so dass eine Relativbewegung zwischen Radachse 12 und insbesondere der Bremsscheibe 12b und Bremsbetätigungseinheit 14, abgesehen von elastischer Verformung, nicht mehr auftritt.

Somit kann der Bremssattel 14a auch bei maximal zulässiger Auslenkung der Radachse 12 im Wesentlichen mit derselben Bremsbelag-Bremsscheiben-Überdeckung die erforderliche Bremswirkung zu erzeugen.

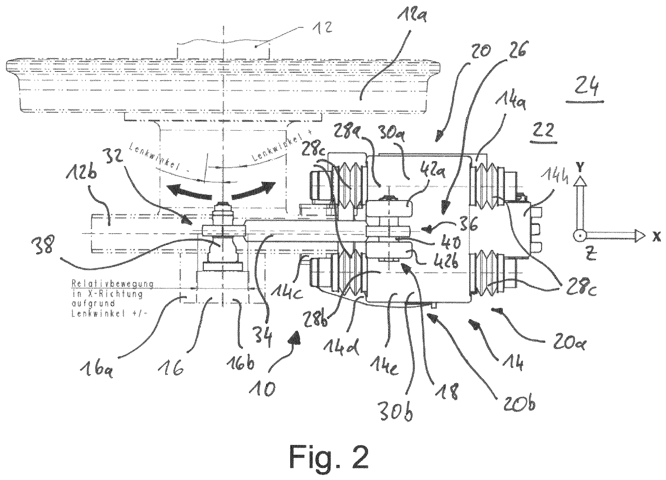

**Fig. 2** zeigt eine Draufsicht des Ausführungsbeispiels des erfindungsgemäßen Verbindungssystems 10 gemäß Fig. 1.

In Fig. 2 ist insbesondere die Anbindung des Mitnehmers 16 über das Lenkgestänge 34 über den Anlenkpunkt 18 an den Bremssattelträger 14e detaillierter gezeigt.

Die beiden Verbindungsschenkel 42a, 42b sind (im gezeigten Ausführungsbeispiel) im montierten Zustand bezüglich der Mittelachse des Lenkgestänges 34 im Wesentlichen achsensymmetrisch angeordnet. Grundsätzlich ist aber denkbar, dass der Abstand von z.B. dem Verbindungsschenkel 42a zur Mitte 34 größer ist als beispielsweise von Verbindungsschenkel 42b zur Mitte 34. Denkbar wäre in diesem Zusammenhang, einen Ausgleich z.B. mit Buchsen zu realisieren.

Auch der erste und zweite Linearführungsbolzen 28a, 28b und dementsprechend auch die erste und zweite Bolzenaufnahme 30a, 30b sind im montierten Zustand (gemäß gezeigtem Ausführungsbeispiel) bezüglich der Mittelachse des Lenkgestänges 34 achsensymmetrisch angeordnet. Dies ist jedoch nicht zwingend erforderlich und kann auch anderweitig gelöst werden.

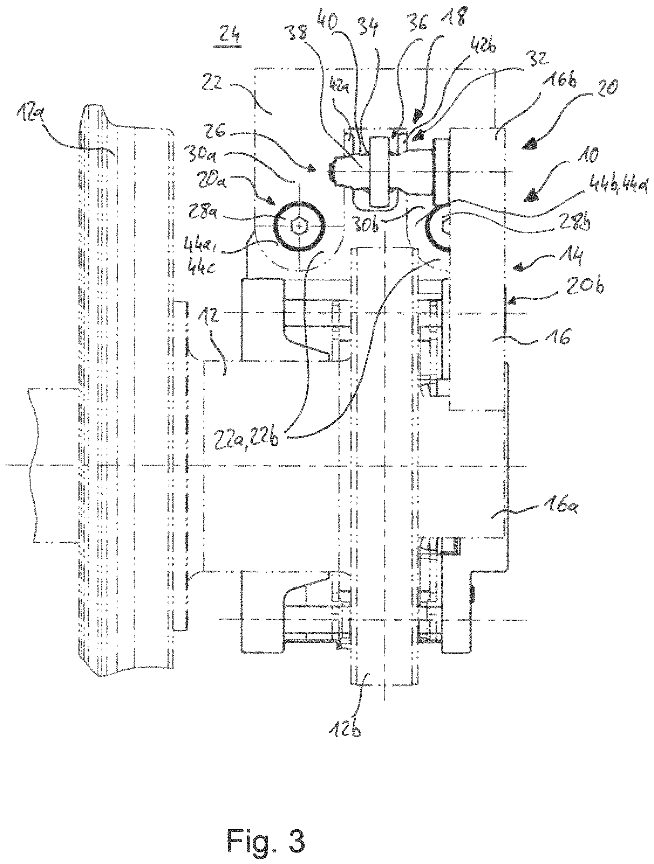

**Fig. 3** zeigt eine Vorderansicht des Ausführungsbeispiels des erfindungsgemäßen Verbindungssystems 10 gemäß Fig. 1.

Auch in dieser Ansicht sind die achsensymmetrischen Anordnungen der beiden Verbindungsschenkel 42a, 42b, Linearführungsbolzen 28a, 28b sowie Bolzenaufnahmen 30a, 30b bezüglich der Mittelachse des Lenkgestänges 34 dargestellt.

Ferner ist die Drehlagerung des Mitnehmers 16 an seinem ersten Ende 16a an der Radachse 12 in einem höheren Detaillierungsgrad dargestellt.

Das erste Ende 16a ist als topfartige Buchse ausgebildet, aus der sich der Mitnehmer 16 im montierten Zustand 16 senkrecht in z-Richtung erhebt.

Zudem sind der Mitnehmer 16 und die topfartige Buchse einstückig ausgebildet.

Die topartige Buchse ist außerhalb der Bremsscheibe 12b über die Radiallagereinheit mit einem Endzapfen der Radachse drehbar verbunden und wie vorstehend beschrieben axial fixiert.

Gemäß Fig. 3 sind der erste und zweite Linearführungsbolzen 28a, 28b in der Schwimmlageraufnahmeeinheit 22 des Drehgestells 24 aufgenommen bzw. gelagert.

Die Schwimmlageraufnahmeeinheit 22 umfasst zwei Aufnahmeaussparungspaare 22a, 22b, die mit den jeweiligen Enden des ersten und zweiten Linearführungsbolzen 28a, 28b korrespondieren.

Zusätzlich sind die jeweiligen Enden der Linearführungsbolzen 28a, 28b über jeweils eine Aufnahmebuchse in den korrespondierenden Aufnahmeaussparungen 22a, 22b der Schwimmlageraufnahmeeinheit 22 aufgenommen.

Gemäß Fig. 3 bildet das Drehgestell 24 einen Rahmen mit insgesamt vier Aufnahmeschenkeln 44a - 44d aus, wobei jeder Schenkel eine Aufnahmeaussparung 22a, 22b und eine korrespondierende Aufnahmebuchse für einen Linearführungsbolzen 28a, 28b aufweist.

### BEZUGSZEICHENLISTE

- 10: Verbindungssystem
- 12: Radachse
- 12a: Fahrzeugrad
- 12b: Bremsscheibe
- 14: Bremsbetätigungseinheit
- 14a: Bremssattel
- 14b: hydraulische Zylinder-Kolben-Einheit
- 14c: Bremsbelag
- 14d: Druckleiste
- 14e: Bremssattelträger
- 14f: Verbindungsbolzen
- 14g: Verbindungsbolzen
- 14h: Stützarm
- 16: Mitnehmer
- 16a: erstes Ende des Mitnehmers
- 16b: zweites Ende des Mitnehmers
- 18: Anlenkpunkt
- 20: Schwimmlageranordnung
- 20a: erste Schwimmlagereinheit
- 20b: zweite Schwimmlagereinheit
- 22: Schwimmlageraufnahmeeinheit
- 22a: Aufnahmeaussparung
- 22b: Aufnahmeaussparung
- 24: Drehgestell
- 26: Linearführungseinheit
- 28a: Linearführungsbolzen
- 28b: Linearführungsbolzen
- 28c: Dichtbalg
- 30a: erste Bolzenaufnahme
- 30b: zweite Bolzenaufnahme
- 30c: Gleitlagerbuchse
- 30d: Gleitlagerbuchse
- 32: erstes Drehgelenk
- 34: Lenkgestänge bzw. Verbindungsgestänge
- 36: zweites Drehgelenk
- 38: erster Drehgelenkszapfen
- 40: zweiter Drehgelenkszapfen
- 42a: Verbindungsschenkel
- 42b: Verbindungsschenkel
- 44a: Aufnahmeschenkel
- 44b: Aufnahmeschenkel
- 44c: Aufnahmeschenkel
- 44d: Aufnahmeschenkel

## Patentansprüche

1. Verbindungssystem (10) zur Verbindung wenigstens einer mitlenkenden Radachse (12) und wenigstens einer Bremsbetätigungseinheit (14) eines Schienenfahrzeug, mit wenigstens einem Mitnehmer (16), der mit der mitlenkenden Radachse (12) verbunden ist und wenigstens einen Anlenkungspunkt (18) an der Bremsbetätigungseinheit (14) zu deren Verschiebung aufweist, wobei der Anlenkungspunkt (18) mit der Bremsbetätigungseinheit (14) im montierten Zustand verbunden ist und wobei die Bremsbetätigungseinheit (14) wenigstens eine Schwimmlageranordnung (20) aufweist, wobei mittels der Schwimmlageranordnung (20) eine schwimmende Lagerung der Bremsbetätigungseinheit (14) zumindest in x-Richtung und zumindest in y-Richtung ausgebildet ist, wobei sich die x-Richtung in ihrer Ausrichtung von der y-Richtung unterscheidet.

2. Verbindungssystem (10) nach Anspruch 1,
**dadurch gekennzeichnet, dass**
die Schwimmlageranordnung (20) wenigstens eine erste Schwimmlagereinheit (20a) aufweist, mittels derer die schwimmende Lagerung der Bremsbetätigungseinheit (14) zumindest in x-Richtung ausgebildet ist.

3. Verbindungssystem (10) nach Anspruch 1 oder Anspruch 2,
**dadurch gekennzeichnet, dass**
die Bremsbetätigungseinheit (14) wenigstens einen Bremssattel (14a) aufweist und die Schwimmlageranordnung (20) wenigstens eine zweite Schwimmlagereinheit (20b) aufweist, mittels derer die schwimmende Lagerung des Bremssattels (14a) zumindest in y-Richtung ausgebildet ist.

4. Verbindungssystem (10) nach Anspruch 1 oder Anspruch 2,
**dadurch gekennzeichnet, dass**
die Bremsbetätigungseinheit (14) wenigstens einen Bremssattelträger (14e) aufweist, wobei die erste Schwimmlagereinheit (20a) mittels des Bremssattelträgers (14e) und wenigstens einer Schwimmlageraufnahmeeinheit (22) wenigstens eines Drehgestells (24) des Schienenfahrzeugs ausgebildet ist.

5. Verbindungssystem (10) nach Anspruch 4,
**dadurch gekennzeichnet, dass**
die erste Schwimmlagereinheit (20a) eine Linearführungseinheit (26) aufweist, mittels derer die Bremsbetätigungseinheit (14) in x-Richtung verschiebbar ist.

6. Verbindungssystem (10) nach Anspruch 5,
**dadurch gekennzeichnet, dass**
die Linearführungseinheit (26) wenigstens einen ersten Linearführungsbolzen (28a) und wenigstens einen zweiten Linearführungsbolzen (28b) aufweist.

7. Verbindungssystem (10) nach Anspruch 6,
**dadurch gekennzeichnet, dass**
der erste Linearführungsbolzen (28a) in einer ersten Bolzenaufnahme (30a) des Bremssattelträgers (14e) gelagert ist und der zweite Linearführungsbolzen (28b) in einer zweiten Bolzenaufnahme (30b) des Bremssattelträgers (14e) gelagert ist.

8. Verbindungssystem (10) nach Anspruch 6 oder Anspruch 7,
**dadurch gekennzeichnet, dass**
der erste und zweite Linearführungsbolzen (28a, 28b) in der Schwimmlageraufnahmeeinheit (22) des Drehgestells (24) aufgenommen sind.

9. Verbindungssystem (10) nach Anspruch 7 oder Anspruch 8,
**dadurch gekennzeichnet, dass**
zwischen der ersten Bolzenaufnahme (30a) und der Schwimmlageraufnahmeeinheit (22) sowie zwischen der zweiten Bolzenaufnahme (30b) und der Schwimmlageraufnahmeeinheit (22) jeweils eine Dichtmanschette (28c) angeordnet ist, die den ersten und zweiten Linearführungsbolzen (28a, 28b) dichtend umschließt.

10. Verbindungssystem (10) nach einem der vorhergehenden Ansprüche,
**dadurch gekennzeichnet, dass**
der Mitnehmer (16) an seinem ersten Ende (16a) mit der mitlenkenden Radachse (12) des Schienenfahrzeugs über wenigstens eine Radiallagereinheit drehbar verbunden ist und axial fixiert ist.

11. Verbindungssystem (10) nach einem der vorhergehenden Ansprüche,
**dadurch gekennzeichnet, dass**
der Mitnehmer (16) an seinem zweiten Ende (16b) mittels eines ersten Drehgelenks (32) mit einem Lenkgestänge (34) verbunden ist, das mittels eines zweiten Drehgelenks (36) den Anlenkungspunkt (36) ausbildet.

12. Verbindungssystem (10) nach Anspruch 11,
**dadurch gekennzeichnet, dass**
das zweite Drehgelenk (36) im montierten Zustand der Bremsbetätigungseinheit (14) oberhalb der ersten und zweiten Bolzenaufnahme (30a, 30b) angeordnet ist und an der ersten und/oder zweiten Bolzenaufnahme (30a, 30b) befestigt ist.
